# EUROPEAN PATENT APPLICATION

(11) **EP 4 811 862 A1**
(43) Date of publication of application: **23.09.2026**
(21) Application number: 24899732.2
(22) Date of filing: 29.11.2024
(51) Int. Cl.: H04W 36/00

(54) **INFORMATION REPORTING METHOD, TERMINAL, NETWORK DEVICE, STORAGE MEDIUM, AND COMPUTER PROGRAM PRODUCT**

(30) Priority: 08.12.2023 CN 202311685127
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: DONG, Wenjia, Beijing 100053 (CN); XIE, Fang, Beijing 100053 (CN); HU, Nan, Beijing 100053 (CN)
(74) Representative: J A Kemp LLP
(86) International application number: PCT/CN2024/135592
(87) International publication number: WO 2025/119092

(57) **Abstract**

Disclosed in embodiments of the present application are an information reporting method, a terminal, a network device, a storage medium, and a computer program product. The method is applied to a terminal, and comprises: reporting a first report and/or a second report to a network device, wherein the first report is used for indicating related information of conditional handover (CHO) success, and the second report is used for indicating related information of CHO failure.

## Description

### CROSS REFERENCE TO RELATED APPLICATION

The present disclosure is based on and claims priority to Chinese Patent Application No. 202311685127.7, filed on December 08, 2023 and entitled "Information reporting method, user equipment, network device and storage medium", the contents of which are incorporated herein by reference in its entirety.

### TECHNICAL FIELD

Embodiments of the present disclosure relate to the technical field of mobile communications, and in particular to an information reporting method, a user equipment (UE), a network device, a storage medium, and a computer program product.

### BACKGROUND

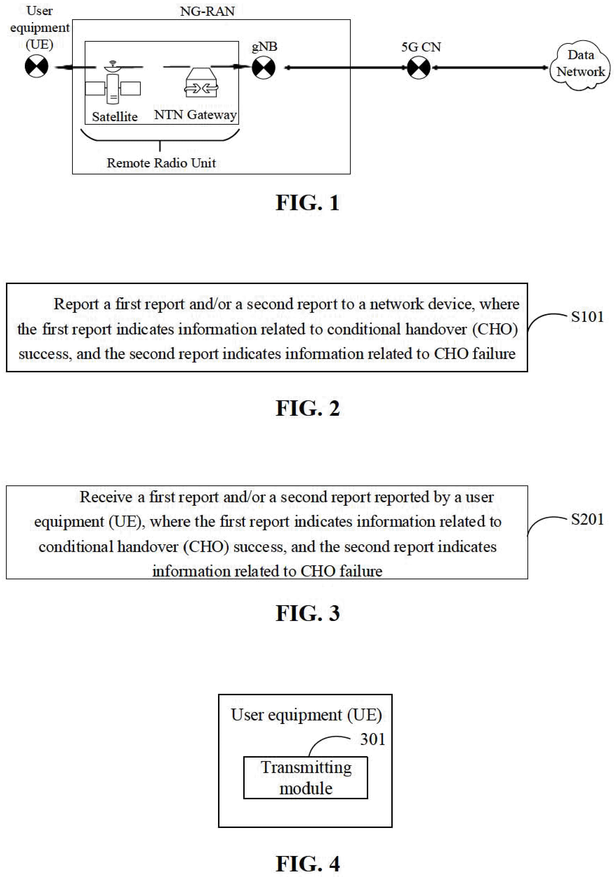

Non-terrestrial networks (NTN), also called satellite communication systems, refer to commutations conducted by terrestrial radio communication devices using satellites as relays. As illustrated in FIG. 1, a satellite communication system is composed of a satellite segment (i.e., a space segment) and a ground segment. Satellite communication is characterized by a wide communication range, that is, communication can be established between any two points as long as they are within the coverage of radio waves transmitted by a satellite, and the satellite communication is not easily affected by terrestrial disasters.

Currently, the NTN uses conditional handover (CHO) to improve the robustness of cell handover. The CHO refers to a situation where a network side configures a CHO trigger condition and a corresponding target cell for a UE, and when the CHO trigger condition is satisfied, the UE triggers the CHO to perform cell handover. However, if the CHO trigger condition is not configured properly, it may cause a too-early or too-late handover, resulting in a handover failure or a radio link failure (RLF) that occurs immediately after the handover, which affects the robustness and reliability of the handover.

### SUMMARY

Embodiments of the present disclosure provide an information reporting method, a user equipment (UE), a network device, a storage medium, and a computer program product, where the UE may report a first report indicating information related to CHO success to the network device, and may also report a second report for indicating information related to CHO failure to the network device, so that the network device may adjust and/or optimize, based on the received reports or specific execution situations of CHO, CHO configurations in an NTN system, thereby effectively avoiding a situation of handover failure or RLF that may occur.

The technical solutions of the embodiments of the application are realized as follows.

An embodiment of the present disclosure provides an information reporting method, which is applied to a UE and includes that:
a first report and/or a second report are reported to a network device, where the first report is used for indicating information related to conditional handover (CHO) success, and the second report is used for indicating information related to CHO failure.

In the above method, a CHO is triggered by a time-based CHO trigger condition and the CHO is successful, the method further includes that:
for the time-based CHO trigger condition, the first report is generated if a time interval between a configured start time at which the CHO is allowed to be executed and an execution time of the CHO or a time when a CHO configuration is applied is greater than or equal to a first time threshold, or less than or equal to a second time threshold.

In the above method, a CHO is triggered by a location-based CHO trigger condition and the CHO is successful, the method further includes that:
for the location-based CHO trigger condition, when the CHO is executed or a CHO configuration is applied, if a measured distance between the UE and a serving cell moving reference location is greater than or equal to a first distance threshold, the first reported is generated.

In the above method, the first report includes at least one of the following:
a CHO execution time, or a time interval between a CHO execution time and a time at which a last CHO trigger condition is satisfied;
for a location-based CHO trigger condition, a measured distance between the UE and a serving cell moving reference location and/or a measured distance between the UE and a target cell moving reference location when the CHO trigger condition is satisfied;
for a location-based CHO trigger condition, when a duration within which the CHO trigger condition is satisfied reaches a configured CHO trigger time, a measured distance between the UE and a serving cell moving reference location and/or a measured distance between the UE and a target cell moving reference location;
a time when a first CHO trigger condition is satisfied;
a time when a second CHO trigger condition is satisfied, or a time interval between a time when a first CHO trigger condition is satisfied and a time when a second CHO trigger condition is satisfied;
a cause for triggering generation of the first report;
a serving cell measurement result;
a target cell measurement result;
a neighbor cell measurement result;
location information of the UE; or,
a cell radio network temporary identifier (C-RNTI) of the UE.

In the above method, the second report includes at least one of the following:
an order and/or time of satisfying a CHO trigger condition;
for a location-based CHO trigger condition, a measured distance between the UE and a serving cell moving reference location, and/or a measured distance between the UE and a target cell moving reference location;
a cell identifier corresponding to a cell that the UE attempts to access after CHO failure; or,
a type of a CHO trigger condition.

An embodiment of the present disclosure provides an information reporting method, which is applied to a network device and includes that:
a first report and/or a second report reported by a user equipment (UE) are reported, where the first report is used for indicating information related to conditional handover (CHO) success, and the second report is used for indicating information related to CHO failure.

In the above method, the first report includes at least one of the following:
a CHO execution time, or a time interval between a CHO execution time and a time at which a last CHO trigger condition is satisfied;
for a location-based CHO trigger condition, a measured distance between the UE and a serving cell moving reference location and/or a measured distance between the UE and a target cell moving reference location when the CHO trigger condition is satisfied;
for a location-based CHO trigger condition, when a duration within which the CHO trigger condition is satisfied reaches a configured CHO trigger time, a measured distance between the UE and a serving cell moving reference location and/or a measured distance between the UE and a target cell moving reference location;
a time when a first CHO trigger condition is satisfied;
a time when a second CHO trigger condition is satisfied, or a time interval between a time when a first CHO trigger condition is satisfied and a time when a second CHO trigger condition is satisfied;
a cause for triggering generation of the first report;
a serving cell measurement result;
a target cell measurement result;
a neighbor cell measurement result;
location information of the UE; or,
a cell radio network temporary identifier (C-RNTI) of the UE.

In the above method, the second report includes at least one of the following:
an order and/or time of satisfying a CHO trigger condition;
for a location-based CHO trigger condition, a measured distance between the UE and a serving cell moving reference location, and/or a measured distance between the UE and a target cell moving reference location;
a cell identifier corresponding to a cell that the UE attempts to access after CHO failure; or,
a type of a CHO trigger condition.

The method further includes that:
the first report and/or the second report are analyzed, and a CHO configuration is adjusted and/or optimized.

In the above method, the operation of analyzing the first report and adjusting and/or optimizing the CHO configuration includes at least one of the following:
if a cause for triggering generation of the first report in the first report indicates that the UE executes CHO too late or too early, a CHO trigger condition is adjusted and/or optimized; or,
selection of a target cell is adjusted and/or optimized based on a serving cell measurement result, a target cell measurement result, a neighbor cell measurement result and location information of the UE in the first report.

In the above method, the second report includes a cell identifier corresponding to a cell that the UE attempts to access after a CHO failure, and the operation of analyzing the second report and adjusting and/or optimizing the CHO configuration includes at least one of the following:
if the cell identifier corresponds to a source cell or a target cell, a CHO trigger condition is adjusted and/or optimized; or,
selection of a target cell is adjusted and/or optimized if the cell identifier corresponds to a cell different from a target cell and a source cell.

An embodiment of the present disclosure provides a user equipment (UE), including: a first processor, a first memory, and a first communication bus;
the first communication bus is configured to realize communication connection between the first processor and the first memory;
the first processor is configured to execute one or more computer programs stored in the first memory, so as to perform the information reporting method applied to the UE.

An embodiment of the present disclosure provides a network device, including:
a second processor, a second memory, and a second communication bus;
the second communication bus is configured to realize communication connection between the second processor and the second memory;
the second processor is configured to execute one or more computer programs stored in the second memory, so as to perform the information reporting method applied to the network device.

An embodiment of the present disclosure provides a computer-readable storage medium, on which a computer program is stored, where the computer program, when executed by a processor, implements the information reporting method applied to a UE, or the information reporting method applied to a network device.

An embodiment of the present disclosure provides a computer program product, including a computer program, where the computer program, when executed by a processor, implements the information reporting method applied to a UE, or implements the information reporting method applied to a network device.

The embodiments of the present disclosure provide methods for information reporting, a UE, a network device, a storage medium and a computer program product. The method applied to the UE includes that: reporting a first report and/or a second report to the network device; where the first report is used for indicating information related to CHO success, and the second report is used for indicating information related to CHO failure. According to the technical solutions provided by the embodiments of the present disclosure, the UE can report the first report indicating the information related to CHO success to the network device and can also report the second report indicating the information related to the CHO failure to the network device, so that the network device can realize the adjustment and/or optimization of the CHO configuration in the NTN system based on the received reports or the specific execution situations of the CHO, and the possible handover failure or RLF is effectively avoided.

### BRIEF DESCRIPTION OF THE DRAWINGS

FIG. 1 is a schematic diagram of an exemplary NTN transmission architecture according to an embodiment of the present disclosure.
FIG. 2 is a first flowchart illustrating an information reporting method according to an embodiment of the present disclosure.
FIG. 3 is a second flowchart illustrating an information reporting method according to an embodiment of the present disclosure.
FIG. 4 is a first schematic structural diagram of a user equipment (UE) according to an embodiment of the present disclosure.
FIG. 5 is a second schematic structural diagram of a user equipment (UE) according to an embodiment of the present disclosure.
FIG. 6 is a first schematic structural diagram of a network device according to an embodiment of the present disclosure.
FIG. 7 is a second schematic structural diagram of a network device according to an embodiment of the present disclosure.

### DETAILED DESCRIPTION

In order to make the objects, technical solutions and advantages of the present disclosure more apparent, the present disclosure is further described in detail below with reference to the accompanying drawings and embodiments. It should be understood that the specific embodiments described herein are merely illustrative of the application and are not intended to limit the present disclosure.

The following detailed description will specifically explain the technical solutions of the present disclosure and how the technical solutions of the present disclosure solve the above technical problems by using embodiments and with reference to the accompanying drawings. The following embodiments may be combined with each other and details of the same or similar concepts or processes may not be repeated in some embodiments.

In addition, the technical solutions described in the embodiments of the present disclosure may be arbitrarily combined without conflict.

An embodiment of the present disclosure provides an information reporting method, which is applied to a user equipment (UE). FIG. 2 is a first flowchart illustrating an information reporting method according to an embodiment of the present disclosure. As shown in FIG. 2, in the embodiment of the present disclosure, the information reporting method applied to a user equipment (UE) mainly includes the following operation.

In S101, a first report and/or a second report are reported to a network device; here, the first report indicates information related to conditional handover (CHO) success, and the second report indicates information related to CHO failure.

In the embodiment of the present disclosure, the UE may report the first report and/or the second report to the network device. The first report is used for indicating the information related to the CHO success, and the second report is used for indicating the information related to the CHO failure.

In the examples of the present disclosure, the CHO success means CHO handover success, and the CHO failure means CHO handover failure.

In the embodiment of the present disclosure, the UE can report the first report to the network device in a scenario where the CHO succeeds but faces imminent failure, and can also report the second report to the network device in a scenario where the CHO fails, so that the coverage situation is comprehensive, and adjustment and/or optimization of CHO configuration in an NTN system can be realized, thereby effectively avoiding situations of possible handover failure or radio link failure (RLF).

It should be noted that, in this embodiment of the present disclosure, the first report and/or the second report may be reported to the network device by the UE after receiving a request message sent by the network device and used for requesting the UE to report the relevant information; alternatively, the first report and/or the second report may be actively reported by the UE to the network device; alternatively, the UE sends a notification message to the network device to notify the network device that the UE stores relevant information, and reports the first report and/or the second report to the network device after receiving a request message sent by the network device, which is not limited in the embodiments of the present disclosure.

It should be noted that, in the embodiment of the present disclosure, the UE may directly report the first report and/or the second report to the network device, or may forward the first report and/or the second report to the network device through another node. The network device may be a source node in CHO, or may be referred to as a node that configures a CHO trigger condition for the UE.

For example, the first report may reuse an existing successful handover report (SHR) generated when the UE completes cell handover; alternatively, new signaling may be added for reporting the first report. If the existing SHR is reused, the SHR may be indicated to be the first report in an explicit manner by adding a new information element into the SHR or using an existing extension field, or in an implicit manner, for example, by adding a cause for triggering generation of the first report.

For example, the second report may reuse an existing RLF report, or new signaling may be added for reporting the second report. If the existing RLF report is reused, the RLF report may be indicated as the second report, either explicitly or implicitly, by adding a new information element or using an existing extension field.

It should be noted that in an embodiment of the present disclosure, the UE may further perform the CHO only when all CHO trigger conditions are satisfied. The trigger conditions may be a measurement-based CHO trigger condition, a location-based CHO trigger condition, and a time-based CHO trigger condition. The measurement-based CHO trigger condition may be configured separately. However, if a location-based CHO trigger condition or a time-based CHO trigger condition is configured, a measurement-based CHO trigger condition needs to be configured together.

In an embodiment of the present disclosure, when the CHO is triggered by a time-based CHO trigger condition and the CHO is successful, and the UE may add a time threshold as a condition for the UE to generate the first report with respect to the time-based CHO trigger condition. Specifically, the UE may perform the following operations: for a time-based CHO trigger condition, a first report is generated if a time interval between the configured start time at which CHO is allowed to be executed and an execution time of the CHO or the time at which the CHO configuration is applied is greater than or equal to a first time threshold, or less than or equal to a second time threshold.

It can be understood that, in an embodiment of the present disclosure, the UE may simultaneously monitor whether the time interval is greater than or equal to the first time threshold and whether the time interval is less than or equal to the second time threshold, or only monitor whether the time interval is greater than or equal to the first time threshold or whether the time interval is less than or equal to the second time threshold, to decide whether to generate the first report, which may be specifically selected and set according to actual requirements, and the embodiment of the present disclosure is not limited.

In an embodiment of the present disclosure, the UE does not generate the first report if the time interval is less than the first time threshold; and of course, the UE also does not generate the first report if the time interval is greater than the second time threshold.

It will be appreciated that in embodiments of the present disclosure, the first and second time thresholds are applicable to time-based CHO trigger conditions, i.e., the UE needs to trigger CHO within a certain time range [t1, t2]. The effect of adding the first time threshold is to detect that the time when the UE performs the CHO is too late, there may be a handover failure caused by the UE failing to complete the CHO before the time t2, which helps the network device to adjust the configuration at the time t2, so as to reduce the risk of CHO failure. The effect of adding the second time threshold is to detect that the time when the UE performs CHO is too early, if the time t1 is too late, there may be a risk of RLF occurring before the UE triggers CHO, which helps the network to adjust the configuration at the time t1, so as to reduce the risk of RLF.

It should be noted that, in an embodiment of the present disclosure, the first time threshold and the second time threshold may be configured in advance by the network device and sent to the UE, or defined in a protocol. Specifically, the first time threshold and the second time threshold may be represented in any of the following forms:

an absolute value of a duration, with the unit of milliseconds (ms); for example, a value of the first time threshold is 100ms, which represents 100ms after the time t1, i.e., t1 + 100 ms; and

a proportional form, for example, a value of the first time threshold is 80%, which represents Duration×80% after the time t1, i.e., t1 + Duration×80%; where t1 and Duration are configured by the network and sent to the UE in the time-based CHO trigger condition, and the Duration represents a duration for which the CHO is allowed to be triggered.

It should be understood that, in the embodiment of the present disclosure, the first time threshold and the second time threshold may be absolute values of duration, in this case, the time interval may be directly compared with the first time threshold and the second time threshold. Alternatively, the first time threshold and the second time threshold may also be in a proportional form, in this case, the time interval needs to be converted into information on the same dimension as the time threshold, and a ratio of the time interval to Duration needs to be calculated. If the time interval is greater than or equal to the first time threshold, it indicates that the ratio is greater than or equal to the first time threshold, and correspondingly, if the time interval is less than or equal to the second time threshold, it indicates that the ratio is less than or equal to the second time threshold.

In an embodiment of the present disclosure, when a CHO is triggered by a location-based CHO trigger condition and the CHO is successful, and the UE may add a distance threshold as a condition for the UE to generate the first report with respect to the location-based CHO trigger condition. Specifically, the UE may perform the following operations: for the location-based CHO trigger condition, when the CHO is executed or the CHO configuration is applied, if a measured distance between the UE and the serving cell moving reference location is greater than or equal to the first distance threshold, a first report is generated.

In addition, in the embodiment of the present disclosure, if the measured distance is smaller than the first distance threshold, the UE does not generate the first report.

It will be appreciated that in embodiments of the present disclosure, the first distance threshold is applicable to location-based CHO trigger conditions. The newly added first distance threshold is used for discovering that a location where the UE actually performs the CHO is already located at the edge of the cell after the UE reaches the distance threshold between the UE and the serving cell moving reference location configured by the location-based CHO trigger condition and continues to reach the CHO trigger time (time to Trigger), and there may be a risk of RLF occurring before the UE performs the CHO, which is helpful for the network device to adjust and/or optimize the distance threshold and the CHO trigger time configured by the location-based CHO trigger condition.

It should be noted that, in this embodiment of the present disclosure, the first distance threshold may be configured in advance by the network device and sent to the UE, or defined in a protocol. Specifically, the first distance threshold may be represented in any of the following forms:
an absolute value of a distance, with the unit of meters (m) or kilometers (km); for example, a value of the first distance threshold is 1000m, which indicates that the distance between the UE and the serving cell moving reference location is 1000 m; and
a proportional form, for example, a value of the first distance threshold is 120%, which indicates that reference distance threshold × 120%, i.e., the distance from the moving reference location of the serving cell is reference distance threshold × 120%; or a value of the first distance threshold is 20%, which indicates that reference distance threshold × (1 + 20%).

It is understood that, in the embodiment of the present disclosure, the first distance threshold may be an absolute value of a distance, in this case, the distance may be directly compared with the first distance threshold. Alternatively, the first distance threshold may be in a proportional form, in which case, the distance needs to be converted into information on the same dimension as the first distance threshold, and a ratio of the distance to the reference distance threshold needs to be calculated, so as to perform the comparison.

In an embodiment of the present disclosure, the first report includes at least one of the following:
a CHO execution time, or a time interval between the CHO execution time and a time when a last CHO trigger condition is satisfied;
for a location-based CHO trigger condition, a measured distance between a UE and a serving cell moving reference location and/or a measured distance between the UE and a target cell moving reference location when the CHO trigger condition is satisfied;
for a location-based CHO trigger condition, when a duration within which the CHO trigger condition is satisfied reaches a configured CHO trigger time, a measured distance between the UE and the serving cell moving reference location and/or a measured distance between the UE and the target cell moving reference location;
a time when a first CHO trigger condition is satisfied;
a time when a second CHO trigger condition is satisfied, or a time interval between the time when the first CHO trigger condition is satisfied and the time when the second CHO trigger condition is satisfied;
a cause for triggering generation of a first report;
a serving cell measurement result;
a target cell measurement result;
a neighbor cell measurement result;
location information of the UE; or,
a cell radio network temporary identifier (C-RNTI) of the UE.

It should be noted that, in the embodiment of the present disclosure, the first report may include the execution time of the CHO, or the time interval between the execution time of the CHO and the time when the last CHO trigger condition is satisfied. The UE may execute the CHO further only when all CHO trigger conditions are satisfied. If the network device configures one CHO trigger condition for the UE, the CHO trigger condition is the last CHO trigger condition, and if the network device configures two CHO trigger conditions for the UE, the last CHO trigger condition is the second satisfied CHO trigger condition. The CHO execution time, or the time interval between the CHO execution time and the time when the last CHO trigger condition is satisfied, may assist the network device in adjusting and/or optimizing the aforementioned time t1 and time t2.

It should be noted that, in the embodiment of the present disclosure, the time when the first CHO trigger condition is satisfied may be represented using universal time coordinated (UTC), and this information may assist the network device to adjust and/or optimize the time t1 and the time t2.

It should be noted that, in the embodiment of the present disclosure, when two CHO trigger conditions are configured, the time when the second CHO trigger condition is satisfied, or the time interval between the time when the first CHO trigger condition is satisfied and the time when the second CHO trigger condition is satisfied, may assist the network device to adjust and/or optimize the above-mentioned time t1 and time t2.

It should be noted that, in the embodiment of the present disclosure, for the location-based CHO trigger condition, the distance between the UE and the serving cell moving reference location and/or the distance between the UE and the target cell moving reference location when the CHO trigger condition is satisfied may assist the network device to adjust and/or optimize the distance threshold configured by the location-based CHO trigger condition.

It should be noted that, in the embodiment of the present disclosure, for the location-based CHO trigger condition, when the duration meeting the CHO trigger condition reaches the configured CHO trigger time, the distance between the UE and the serving cell moving reference location and/or the distance between the UE and the target cell moving reference location may assist the network to adjust and/or optimize the distance threshold and the CHO trigger time configured by the location-based CHO trigger condition.

It should be noted that, in the embodiment of the present disclosure, with respect to the cause for triggering generation of the first report, for example, 4 bits are used to correspond to the first time threshold, the second time threshold, the first distance threshold, and measurement-based triggering, respectively, where a cause corresponding to the bit set to 1 indicates the cause for triggering generation of the first report.

It should be noted that, in the embodiment of the present disclosure, the serving cell measurement result includes, for example, reference signal receiving power (RSRP)/reference signal receiving quality (RSRQ)/signal to interference plus noise ratio (SINR); the target cell measurement result includes, for example, RSRP/RSRQ/SINR; the neighbor cell measurement result includes, for example, RSRP/RSRQ/SINR; and the cell radio network temporary identifier (C-RNTI) of the UE includes, for example, a target C-RNTI or a source C-RNTI.

In the embodiment of the present disclosure, in a scenario of a CHO failure, the UE may report the second report to the network device, where the CHO failure may be caused by a too-early handover, a too-late handover, or a wrong cell handover of the UE. The too-early handover refers to that the UE experiences a CHO failure or an RLF immediately after the CHO success, a cell that the UE attempts to reestablish is still a source cell, that is, a CHO trigger condition is satisfied too early. The too-late handover means that after the UE experiences the RLF, the cell that the UE attempts to reestablish is the target cell, that is, the RLF occurs before the CHO trigger condition is satisfied. The wrong cell handover means that the UE finds that a suitable cell for the UE to camp on is a cell other than a source cell and a target cell after failure occurs, that is, the suitable cell is not among the source cell and the selected target cell.

In an embodiment of the present disclosure, the second report includes at least one of the following:
an order and/or time of satisfying a CHO trigger condition;
for a location-based CHO trigger condition, a measured distance between a UE and a serving cell moving reference location, and/or a measured distance between the UE and a target cell moving reference location;
a cell identifier corresponding to a cell that the UE attempts to access after CHO failure; or,
a type of the CHO trigger condition.

It should be noted that, in the embodiment of the present disclosure, for the order and/or time of satisfying the CHO trigger condition, specifically: if only one CHO trigger condition is configured, the time when the CHO trigger condition is satisfied is recorded, and if the field is empty, it indicates that the CHO trigger condition is not satisfied; if two CHO trigger conditions are configured, a respective time when each of the two CHO trigger conditions is satisfied is recorded in time sequence, if the field is empty, it indicates that neither of the two CHO trigger conditions is satisfied, and if the field only records the time when one CHO trigger condition is satisfied, it indicates that the other CHO trigger condition is not met; if two CHO trigger conditions are configured, it is also possible to record the time when the first CHO trigger condition is satisfied and an time interval between the time when the second CHO trigger condition is satisfied and the time when the first CHO trigger condition is satisfied, if this field is empty, it indicates that neither of the two CHO trigger conditions is satisfied, and if this field only records the time when one CHO trigger condition is satisfied, it indicates that the other CHO trigger condition is not satisfied.

It should be noted that, in the embodiment of the present disclosure, for the location-based CHO trigger condition, the measured distance between the UE and the serving cell moving reference location and/or the measured distance between the UE and the target cell moving reference location refer to a measured distance between the UE and the serving cell moving reference location and/or a measured distance between the UE and the target cell moving reference location when a handover fails or a RLF occurs or CHO execution is triggered.

It should be noted that, in the embodiment of the present disclosure, for the type of the CHO trigger condition, for example, 3 bits are used to correspond to a measurement-based CHO triggering, a location-based CHO triggering, and a time-based CHO triggering, respectively. The measurement-based CHO triggering refers to that the UE is only configured with a measurement-based CHO trigger condition; the location-based CHO triggering means that the UE is configured with both location-based and measurement-based CHO trigger conditions; and the time-based CHO triggering means that the UE is configured with both time-based and measurement-based CHO trigger conditions.

In the embodiments of the present disclosure, firstly, the UE can report related reports to the network device when the CHO succeeds or fails, so that the coverage scenario is comprehensive, and the adjustment and/or optimization of the CHO configuration in the NTN system can be realized, thereby effectively avoiding possible handover failure or RLF. Secondly, the particularity of the NTN system is fully considered, in addition to the traditional measurement-based CHO trigger condition, there are also time-based or location-based CHO trigger condition; further, the generation of the first report and the information of the first report and the second report are respectively defined for the time-based or location-based CHO trigger condition, so that the network device can optimize the CHO configuration in a targeted manner; thirdly, a first time threshold and/or a second time threshold are/is newly added as a condition for generating the first report by the UE, so that too-early or too-late CHO triggering can be effectively avoided, and the CHO robustness and the success rate are improved; fourthly, a first distance threshold is newly added to serve as a trigger condition for the UE to generate the first report, so that a situation that the UE triggers CHO too late and RLF occurs before the CHO caused by unreasonable configuration of the distance from a reference location or the CHO trigger time can be effectively avoided, and the stability of user experience is guaranteed.

An embodiment of the present disclosure provides an information reporting method which is applied to a network device. FIG. 3 is a second flowchart illustrating an information reporting method according to an embodiment of the present disclosure. As shown in FIG. 3, in the embodiment of the present disclosure, an information reporting method applied to the network device mainly includes the following operation:
In S201, a first report and/or a second report reported by a UE is received, where the first report is used for indicating information related to CHO success, and the second report is used for indicating information related to CHO failure.

It should be noted that, in the embodiment of the present disclosure, the network device receives the first report and/or the second report reported by the UE includes that: the first report and/or the second report may be received directly from the UE, or may be received through forwarding by another node.

In an embodiment of the present disclosure, the first report includes at least one of the following:
a CHO execution time, or a time interval between the CHO execution time and a time at which a last CHO trigger condition is satisfied;
for a location-based CHO trigger condition, a measured distance between a UE and a serving cell moving reference location and/or a measured distance between the UE and a target cell moving reference location when the CHO trigger condition is satisfied;
for a location-based CHO trigger condition, a measured distance between the UE and a serving cell moving reference location and/or a measured distance between the UE and a target cell moving reference location when a duration in which the CHO trigger condition is satisfied reaches a configured CHO trigger time;
a time when a first CHO trigger condition is satisfied;
a time when a second CHO trigger condition is satisfied, or a time interval between the time when the first CHO trigger condition is satisfied and the time when the second CHO trigger condition is satisfied;
a cause for triggering generation of the first report;
a serving cell measurement result;
a target cell measurement result;
a neighbor cell measurement result;
location information of the UE; or,
a cell radio network temporary identifier (C-RNTI) of the UE.

In an embodiment of the present disclosure, the second report includes at least one of the following:
an order and/or time of satisfying a CHO trigger condition;
for a location-based CHO trigger condition, a measured distance between the UE and a serving cell moving reference location, and/or a measured distance between the UE and a target cell moving reference location; or,
a cell identifier corresponding to a cell that the UE attempts to access after CHO failure; or,
a type of a CHO trigger condition.

In the embodiment of the present disclosure, the information included in each of the first report and the second report is identical to the related content in the UE side method, and is not described again here.

In an embodiment of the present disclosure, the network device may analyze the first report and/or the second report, and adjust and/or optimize a CHO configuration.

In an embodiment of the present disclosure, the network device analyzes the first report and adjusts and/or optimizes the CHO configuration includes at least one of the following:
if a cause for triggering generation of the first report in the first report indicates that the UE executes the CHO too late or too early, a CHO trigger condition is adjusted and/or optimized; or,
selection of a target cell is adjusted and/or optimized based on a serving cell measurement result, a target cell measurement result, a neighbor cell measurement result, and location information of the UE in the first report.

It should be noted that, in the embodiment of the present disclosure, if the generation of the first report is triggered based on the first time threshold, i.e., the cause for triggering the generation of the first report characterizes that the UE executes the CHO too late, a duration within with a CHO event is allowed to be triggered configured in the CHO trigger condition may be increased according to the CHO execution time or the time interval between the CHO execution time and the time when the last CHO trigger condition is satisfied in the first report; or, delaying the time t1 according to the time when the first CHO trigger condition is satisfied, or the time when the second CHO trigger condition is satisfied, or the time interval between the time when the second CHO trigger condition is satisfied and the time when the first CHO trigger condition is satisfied in the first report, i.e., the time range for CHO execution is shifted backwards as a whole, where the trigger condition in this case refer to a time-based CHO trigger condition.

It should be noted that, in the embodiment of the present disclosure, if the generation of the first report is triggered based on the first distance threshold, i.e., the cause for triggering the generation of the first report characterizes that the UE executes the CHO too late, in fact that the UE is located close to the cell edge, a moving distance of the UE within a CHO trigger time is calculated based on a distance between the UE and the serving cell reference location when a CHO trigger condition and a measurement event are satisfied, or a distance between the UE and the serving cell reference location when a duration within which the CHO trigger condition is satisfied reaches the configured CHO trigger time in the first report, if the moving distance is larger, the CHO trigger time configured in the CHO trigger condition may be shortened, or a reference distance threshold configured in the CHO trigger condition may be shortened, and/or a new reference distance threshold may be added, where the CHO trigger condition in this case refers to a location-based CHO trigger condition.

It should be noted that, in the embodiment of the present disclosure, if the generation of the first report is triggered based on the second time threshold, that is, the cause for triggering the generation of the first report indicates that the UE triggers CHO too early, the time t1 configured in the CHO trigger condition may be advanced according to the CHO execution time or the time interval between the CHO execution time and the time when the last CHO trigger condition is satisfied in the first report, and particularly, when the time interval is large,. it indicates that the time t1 is configured too late and needs to be advanced, where the trigger condition in this case refers to a time-based CHO trigger condition.

In an embodiment of the present disclosure, the second report includes a cell identifier corresponding to a cell that the UE attempts to access after the CHO failure, the operation of analyzing the second report and adjusting and/or optimizing the CHO configuration includes at least one of the following:
if the cell identifier corresponds to a source cell or a target cell, a CHO trigger condition is adjusted and/or optimized; or,
if the cell identifier corresponds to a cell different from the target cell and the source cell, selection of the target cell is adjusted and/or optimized.

It should be noted that, in the embodiment of the present disclosure, after the CHO failure, the cell that the UE attempts to access is the source cell, which indicates that the UE is switched too early. The network device can consider improving the threshold configured by the CHO trigger condition according to the time when the CHO trigger condition is satisfied in the second report. For the location-based CHO trigger condition, a configured reference distance threshold may be further increased, and the specific value is determined by comprehensive judgment according to the distance between the UE and the serving cell reference point and/or the distance between the UE and the target cell reference point in the second report. For the time-based CHO trigger condition, the configured time t1 may be delayed, and the specific value is determined according to the time when the CHO trigger condition is satisfied.

It should be noted that, in the embodiment of the present disclosure, after the CHO failure, the cell that the UE attempts to access is the target cell, which indicates that the UE performs the handover too late. The network device may consider to properly reduce the configured threshold according to the time when the CHO trigger condition is satisfied in the second report or a CHO trigger condition that has been not satisfied. For a location-based CHO trigger condition, the configured reference distance threshold may also be reduced; for the time-based CHO trigger condition, the configured time t1 can be advanced, and the specific value is determined according to the time when the CHO trigger condition is satisfied.

It should be noted that, in the embodiment of the present disclosure, after the CHO failure, if the cell that the UE attempts to access is a cell other than the source cell and the target cell, it indicates that the UE performs a wrong cell handover, and the network device may optimize selection of the target cell, where the second report may also include the serving cell measurement result, the target cell measurement result, the neighbor cell measurement result, and the location information of the UE, as in the first report, for optimizing selection of the target cell. Of course, the selection of the target cell may also be optimized based on other information or rules, which is not limited in the embodiment of the present disclosure.

An embodiment of the present disclosure also provides user equipment (UE). FIG. 4 is a first schematic structural diagram of a UE according to an embodiment of the present disclosure. As shown in FIG. 4, in an embodiment of the present disclosure, a UE includes a transmitting module 301.

The transmitting module 301 is configured to report a first report and/or a second report to a network device.

The first report is used for indicating information related to CHO success, and the second report is used for indicating information related to CHO failure.

In an embodiment of the present disclosure, a CHO is triggered by a time-based CHO trigger condition and the CHO is successful, the UE further includes a first processing module 302 (not shown in the Figure).

The first processing module 302 is configured to, for a time-based CHO trigger condition, generate the first report if a time interval between a configured start time when the CHO is allowed to be executed and an execution time of the CHO or a time of applying a CHO configuration is greater than or equal to a first time threshold, or less than or equal to a second time threshold.

In an embodiment of the present disclosure, the CHO is triggered by a location-based CHO trigger condition and the CHO is successful, the first processing module 302 is configured to, for the location-based CHO trigger condition, generate the first report if a distance between the UE and a serving cell reference location is greater than or equal to a first distance threshold when the CHO is executed or a CHO configuration is applied.

In an embodiment of the present disclosure, the first report includes at least one of the following:
a CHO execution time, or a time interval between the CHO execution time and a time at which a last CHO trigger condition is satisfied;
for a location-based CHO trigger condition, a distance between the UE and a serving cell reference location, and/or a distance between the UE and a target cell reference location when the CHO trigger condition is satisfied;
for a location-based CHO trigger condition, when a duration meeting the CHO trigger condition reaches a configured CHO trigger time, a distance between the UE and a serving cell reference location and/or a distance between the UE and a target cell reference location;
a time when a first CHO trigger condition is satisfied;
a time at which a second CHO trigger condition is satisfied, or a time interval between a time when the first CHO trigger condition is satisfied and a time when the second CHO trigger condition is satisfied;
a cause for triggering generation of the first report;
a serving cell measurement result;
a target cell measurement result;
a neighbor measurement result;
location information of the UE; or,
a cell radio network temporary identifier (C-RNTI) of the UE.

In an embodiment of the present disclosure, the second report includes at least one of the following:
an order and/or time of satisfying a CHO trigger condition;
for a location-based CHO trigger condition, a distance between the UE and a serving cell reference location, and/or a distance between the UE and a target cell reference location;
a cell identifier corresponding to a cell that the UE attempts to access after CHO failure; or
a type of a CHO trigger condition.

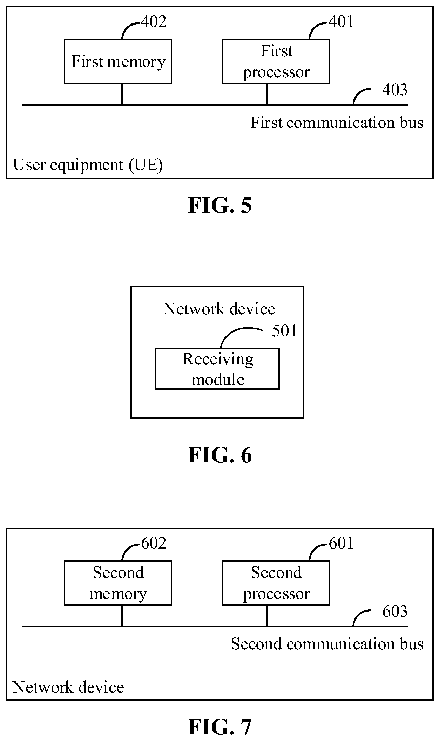

FIG. 5 is a second schematic structural diagram of a UE according to an embodiment of the present disclosure. As shown in FIG. 5, in an embodiment of the present disclosure, a UE includes: a first processor 401, a first memory 402 and a first communication bus 403.

The first communication bus 403 configured to establish a communication connection between the first processor 401 and the first memory 402.

The first processor 401 is configured to execute one or more computer programs stored in the first memory 402, so as to perform an information reporting method applied to a UE.

An embodiment of the present disclosure also provides a network device. FIG. 6 is a first schematic structural diagram of a network device according to an embodiment of the present disclosure. As shown in FIG. 6, in an embodiment of the present disclosure, a network device includes a receiving module 501.

The receiving module 501 is configured to receive a first report and/or a second report reported by a UE.

The first report is used for indicating information related to conditional handover (CHO) success, and the second report is used for indicating information related to CHO failure.

In an embodiment of the present applicaiton, the first report includes at least one of the following:
a CHO execution time, or a time interval between the CHO execution time and a ime at which a last CHO trigger condition is satisfied;
for a location-based CHO trigger condition, a distance between the UE and a reference location of a service cell, and/or a distance between the UE and a reference location of a target cell when the CHO trigger condition is satisfied;
for a location-based CHO trigger condition, when a duration meeting the CHO trigger condition reaches a configured CHO trigger time, a distance between the UE and a serving cell reference location and/or a distance between the UE and a target cell reference location;
a time when a first CHO trigger condition is satisfied;
a time when a second CHO trigger condition is satisfied, or a time interval between the time when the first CHO trigger condition is satisfied and the time when the second CHO trigger condition is satisfied;
a cause for triggering generation of the first report;
a serving cell measurement result;
a target cell measurement result;
a neighbor cell measurement result;
location information of the UE; or,
a cell radio network temporary identifier (C-RNTI) of the UE.

In an embodiment of the present disclosure, the second report includes at least one of the following:
an order and/or time of satisfying a CHO trigger condition;
for a location-based CHO trigger condition, a distance between the UE and a serving cell reference location, and/or a distance between the UE and a target cell reference location;
a cell identifier corresponding to a cell that the UE attempts to access after CHO failure; or
a type of a CHO trigger condition.

In an embodiment of the present disclosure, the network device further includes a second processing module 502 (not shown).

The second processing module 502 is configured to analyze the first report and/or the second report, and adjust and/or optimize a CHO configuration.

In an embodiment of the present disclosure, the second processing module 502 is configured to perform at least one of the following:
if a cause for triggering the generation of the first report in the first report indicates that the UE performs the CHO too late or too early, adjusting and/or optimizing CHO trigger condition; or,
adjusting and/or optimizing selection of the target cell based on the serving cell measurement result, the target cell measurement result, the neighbor cell measurement result and the location information of the UE in the first report.

In an embodiment of the present disclosure, the second report includes a cell identifier corresponding to a cell that the UE attempts to access after a CHO failure, and the second processing module 502 is configured to perform at least one of the following:
if the cell identifier corresponds to a source cell or a target cell, adjusting and/or optimizing a CHO trigger condition; or,
adjusting and/or optimizing selection of the target cell if the cell identifier corresponds to a cell other than the target cell and the source cell.

FIG. 7 is a second schematic structural diagram of a network device according to an embodiment of the present disclosure. As shown in FIG. 7, in an embodiment of the present disclosure, a network device includes: a second processor 601, a second memory 602, and a second communication bus 603.

The second communication bus 603 is configured to establish a communication connection between the second processor 601 and the second memory 602.

The second processor 601 is configured to execute one or more computer programs stored in the second memory 602, so as to implement the information reporting method applied to the network device.

An embodiment of the present disclosure provides a computer program product, including a computer program, where the computer program, when executed by a processor, implements steps in an information reporting method applied to a UE, or implements steps in an information reporting method applied to a network device.

An embodiment of the present disclosure provides a computer-readable storage medium, on which a computer program is stored, where the computer program, when executed by a processor, implements steps in an information reporting method applied to a UE, or steps in an information reporting method applied to a network device. The computer-readable storage medium may be a volatile memory (RAM), such as a random-access memory (RAM); or a non-volatile memory, such as a read-only memory (ROM), a flash memory, a hard disk drive (HDD), or a solid-state drive (SSD); or a device, such as a mobile phone, computer, tablet device, personal digital assistant, etc., that includes one or any combination of the above memories.

As will be appreciated by one skilled in the art, embodiments of the present disclosure may be provided as a method, system, or computer program product. Accordingly, the present disclosure may take the form of a hardware embodiment, a software embodiment, or an embodiment combining software and hardware aspects. Furthermore, the present disclosure may take the form of a computer program product embodied on one or more computer-usable storage media (including, but is not limited to, disk storage, optical storage, and the like) having computer-usable program code embodied therein.

The present disclosure has been described with reference to flowchart illustrations and/or block diagrams of implementations of methods, apparatus (systems) and computer program products according to embodiments of the application. It will be understood that each flow and/or block of the flowchart illustrations and/or block diagrams, and combinations of flows and/or blocks in the flowchart illustrations and/or block diagrams, can be implemented by computer program instructions. These computer program instructions may be provided to a processor of a general purpose computer, special purpose computer, embedded processor, or other programmable data processing apparatus to produce a machine, such that the instructions, which execute via the processor of the computer or other programmable data processing apparatus, create means for implementing the functions specified in the flowchart flow or flows and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function specified in the flowchart block or blocks for implementing the flowchart block or blocks.

These computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions specified in the flowchart block or blocks.

The above description is only for the specific embodiments of the present disclosure, but the scope of the present disclosure is not limited thereto, and any changes or substitutions that can be easily conceived by those skilled in the art within the technical scope of the present disclosure disclosed in the present disclosure should be covered within the scope of the present disclosure. Therefore, the protection scope of the present disclosure shall be subject to the protection scope of the claims.

## Claims

1. A method for information reporting, applied to a user equipment (UE), the method comprising:
reporting a first report and/or a second report to a network device,
wherein the first report indicates information related to conditional handover (CHO) success, and the second report indicates information related to CHO failure.

2. The method of claim 1, wherein a CHO is triggered by a time-based CHO trigger condition and the CHO is successful, the method further comprises:
for the time-based CHO trigger condition, if a time interval between a configured start time when the CHO is allowed to be executed and an execution time of the CHO or a time when a CHO configuration is applied is greater than or equal to a first time threshold, or less than or equal to a second time threshold, generating the first report.

3. The method of claim 1, wherein a CHO is triggered by a location-based CHO trigger condition and the CHO is successful, the method further comprises:
for the location-based CHO trigger condition, when the CHO is executed or a CHO configuration is applied, if a measured distance between the UE and a serving cell moving reference location is greater than or equal to a first distance threshold, generating the first report.

4. The method of claim 1, wherein the first report comprises at least one of the following:
a CHO execution time, or a time interval between a CHO execution time and a time when a last CHO trigger condition is satisfied;
for a location-based CHO trigger condition, a measured distance between the UE and a serving cell moving reference location and/or a measured distance between the UE and a target cell moving reference location when the CHO trigger condition is satisfied;
for a location-based CHO trigger condition, a measured distance between the UE and a serving cell moving reference location and/or a measured distance between the UE and a target cell moving reference location when a duration within which the CHO trigger condition is satisfied reaches a configured CHO trigger time;
a time when a first CHO trigger condition is satisfied;
a time when a second CHO trigger condition is satisfied, or a time interval between a time when a first CHO trigger condition is satisfied and a time when a second CHO trigger condition is satisfied;
a cause for triggering generation of the first report;
a serving cell measurement result;
a target cell measurement result;
a neighbor cell measurement result;
location information of the UE; or
a cell radio network temporary identifier (C-RNTI) of the UE.

5. The method of claim 1, wherein the second report comprises at least one of the following:
an order and/or time of satisfying a CHO trigger condition;
for a location-based CHO trigger condition, a measured distance between the UE and a serving cell moving reference location, and/or a measured distance between the UE and a target cell moving reference location;
a cell identifier corresponding to a cell that the UE attempts to access after CHO failure; or
a type of a CHO trigger condition.

6. A method for information reporting, applied to a network device, the method comprising:
receiving a first report and/or a second report reported by a user equipment (UE),
wherein the first report indicates information related to conditional handover (CHO) success, and the second report indicates information related to CHO failure.

7. The method of claim 6, wherein the first report comprises at least one of the following:
a CHO execution time, or a time interval between a CHO execution time and a time when a last CHO trigger condition is satisfied;
for a location-based CHO trigger condition, a measured distance between the UE and a serving cell moving reference location and/or a measured distance between the UE and a target cell moving reference location when the CHO trigger condition is satisfied;
for a location-based CHO trigger condition, a measured distance between the UE and a serving cell moving reference location and/or a measured distance between the UE and a target cell moving reference location when a duration within which the CHO trigger condition is satisfied reaches a configured CHO trigger time;
a time when a first CHO trigger condition is satisfied;
a time when a second CHO trigger condition is satisfied, or a time interval between a time when a first CHO trigger condition is satisfied and a time when a second CHO trigger condition is satisfied;
a cause for triggering generation of the first report;
a serving cell measurement result;
a target cell measurement result;
a neighbor cell measurement result;
location information of the UE; or
a cell radio network temporary identifier (C-RNTI) of the UE.

8. The method of claim 6, wherein the second report comprises at least one of the following:
an order and/or time of satisfying a CHO trigger condition;
for a location-based CHO trigger condition, a measured distance between the UE and a serving cell moving reference location, and/or a measured distance between the UE and a target cell moving reference location;
a cell identifier corresponding to a cell that the UE attempts to access after CHO failure; or
a type of a CHO trigger condition.

9. The method of claim 6, where the method further comprises:
analyzing the first report and/or the second report; and
adjusting and/or optimizing a CHO configuration.

10. The method of claim 9, wherein analyzing the first report and adjusting and/or optimizing the CHO configuration comprises at least one of the following:
if a cause for triggering generation of the first report in the first report indicates that the UE executes a CHO too late or too early, adjusting and/or optimizing a CHO trigger condition; or
adjusting and/or optimizing selection of a target cell based on a serving cell measurement result, a target cell measurement result, a neighbor cell measurement result, and location information of the UE in the first report.

11. The method of claim 9, wherein the second report comprises a cell identifier corresponding to a cell that the UE attempts to access after CHO failure, and analyzing the second report and adjusting and/or optimizing the CHO configuration comprises at least one of the following:
if the cell identifier corresponds to a source cell or a target cell, adjusting and/or optimizing a CHO trigger condition; or
if the cell identifier corresponds to a cell different from a target cell and a source cell, adjusting and/or optimizing selection of the target cell.

12. A user equipment (UE), comprising:
a first processor;
a first memory; and
a first communication bus, configured to establish a communication connection between the first processor and the first memory,
wherein the first processor is configured to execute one or more computer programs stored in the first memory to perform the method for information reporting of any one of claims 1-5.

13. A network device, comprising:
a second processor;
a second memory; and
a second communication bus, configured to establish a communication connection between the second processor and the second memory,
wherein the second processor is configured to execute one or more computer programs stored in the second memory to perform the method for information reporting of any one of claims 6-11.

14. A computer-readable storage medium having stored thereon a computer program which, when executed by a processor, implements the method for information reporting of any one of claims 1-11.

15. A computer program product comprising a computer program which, when executed by a processor, implements the method for information reporting of any one of claims 1-11.
